Europäisches Patentamt

European Patent Office

Office européen des brevets

(11) Publication number: **0 304 528**
**A2**

# (12) EUROPEAN PATENT APPLICATION

(21) Application number: **87311049.8**

(51) Int. Cl.4: **H01R 39/40**

(22) Date of filing: **15.12.87**

(30) Priority: **28.08.87 GB 8720346**

(43) Date of publication of application:
**01.03.89 Bulletin 89/09**

(84) Designated Contracting States:
**DE FR IT**

(71) Applicant: **Johnson Electric Industrial Manufactory Limited**
**Johnson Building 14-16 Lee Chung Street Chaiwan(HK)**

(72) Inventor: **Strobl, Georg**
**26 Belleview Drive**
**19/F. Repulse Bay(HK)**

(74) Representative: **Ablewhite, Alan James et al**
**MARKS & CLERK 57/60 Lincoln's Inn Fields London WC2A 3LS(GB)**

(54) **Brush assembly in an electric motor.**

(57) A brush assembly 11 in a fractional horsepower PMDC motor comprises a cage 17 in which a brush 12 is slidable, the brush 12 being urged against a commutator 14 by a torsion spring 13. Power is supplied to the cage 17 and current passes through to the commutator via the brush 12. A leaf spring 26 is riveted 28 to the cage 17 and bears on the brush 12 to urge it against a base plate 19 of the cage 17. This reduces brush chatter and provides an electrical path between the cage and brush, reducing the current flow through the torsion spring 13 which otherwise tends to anneal the torsion spring.

FIG. 2

EP 0 304 528 A2

## BRUSH ASSEMBLY IN AN ELECTRIC MOTOR

The present invention relates to a brush assembly for an electric motor particularly a fractional horse power PMDC (permanent magnet direct current) motor.

Some such PMDC motors utilise a brush assembly in which a brush is loosely held in a tubular metal cage. The brush is urged out of one end of the cage against a commutator by a torsion spring.

Current is fed to (or from) the brush from a terminal for connection to a power supply. The torsion spring is mounted on the cage. The contact between the torsion spring and the brush offers a low resistance path for the current, when compared to that between the cage and the brush. This is probably due to there being a firm, pressure contact between the spring and the brush. The passage of current through the spring heats it up, over a period of time this anneals the spring and so weakens it.

In such caged brush arrangements it is known to insert a leaf spring between the brush and a wall of the cage to reduce chatter of the brush in the cage.

The present invention provides an electric motor having a brush assembly electrically connected to a terminal of the motor, the brush assembly comprising a brush slidably mounted in a generally rectangular cross-section tubular cage open at at least one end, first means for urging the brush through the open end of the cage onto a commutator of the motor and second means for urging the brush against a wall of the cage to reduce brush chatter, wherein said second means comprises a resilient electrically conducting leaf spring which is in electrical contact with the terminal and, which is mounted at one end and is configured to bear at its other end against the brush to bias it against the opposite wall of the cage, the leaf spring making at least line contact with the brush.

Preferably the leaf spring is mounted at said one end by attachment to a cage wall. In another preferred form the leaf spring is attached at said one end or is integral with the terminal. By attaching the leaf spring to the cage or the motor terminal and providing an extended contact surface the leaf spring offers a low resistance path for current to flow between the brush and motor terminal.

Also, by fixing one end of the leaf spring, noise reduction may be enhanced.

Preferably the leaf spring urges the brush in the axial direction of the commutator. This will help reduce brush chatter when the motor rotates in either direction.

Preferably the leaf spring comprises a central, generally planar portion, a first end portion at one end of the central portion, the first end portion being attached to the cage wall, and a second end portion at the other end of the central portion, the junction region between the second end portion and the central portion contacting the brush.

Alternatively, the leaf spring may comprise a first leg by which the spring is attached to the terminal and a second leg obliquely inclined relative to the first leg and bearing against the brush.

The invention will be furthe described by way of example with reference to the accompanying drawings, in which:-

Figure 1 is a perspective view, partly cut away, of a first embodiment of a PMDC motor embodying the invention;

Figure 2 is a cross-section along the Line II-II of Figure 1;

Figure 3 is a cross-section along the Line III-III of Figure 2;

Figure 4 is a view similar to that of Figure 2 of a second embodiment of PMDC motor embodying the invention; and

Figure 5 is a cross-section along the line V-V of Figure 4.

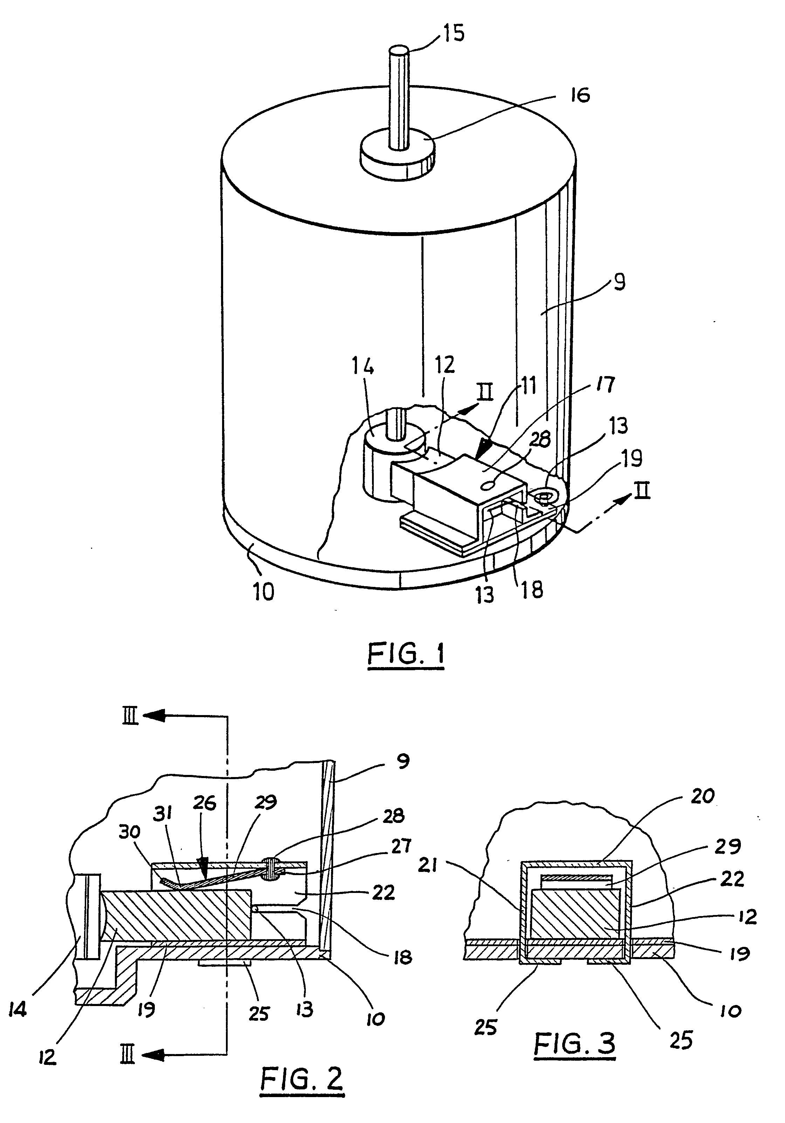

Figure 1 shows a fractional horsepower permanent magnet direct current motor of the type manufactured by the applicants and marketed under catalogue No. HF260G, but incorporating a modified caged brush assembly in accordance with the invention.

The construction of such a motor is well known in the art and therefore will be described only briefly. A steel motor casing 9 carries an electrically insulating end cap 10, typically of plastics. A motor shaft 15 is journalled in bearings 16 in an end of the casing 9 and in the end cap 10 (not shown). Shaft 15 carries a wound armature (not shown) which is supplied with current via a commutator 14 and brush assembly 11.

The brush assembly 11 comprises a metal base plate 19 forming a first wall of the brush cage 17, and a channel shaped metal portion having a top wall 20 parallel to the base plate 19 and side walls 21, 22.

A brush 12 is loosely mounted in the cage 17 and is urged against commutator 14 by a torsion spring 13 which is mounted on the base plate 19 and which projects through a slot 18 in side wall 22.

Referring to Figures 2 and 3, walls 21, 22 each have a tab 25 which projects through an aperture in the base plate 19 and the end cap 10, the tabs being bent over to hold the cage on the end cap. One of the tabs may also form a terminal for the supply of electricity to the cage. A leaf spring 26 of Beryllium Copper alloy has a first end portion 27 which is riveted 28 to the top wall 17. The leaf spring 26 has a central portion 29 biassed away from the top wall 20 and an up turned second end portion 30. The spring bears against the brush 12 at the junction 31 between the central portion 29 and the second end portion 30 to urge it against the base plate 19.

Leaf spring 26 reduces the noise caused by brush chatter when the motor is rotated in either direction,the brush being biassed axially of the commutator, and also provides electrical and positive contact between the brush 12 and the cage 17, by means of the rivets 28 and the extended contact area 31, so that the leaf spring provides a low resistance electrical path between the cage and the brush. The leaf spring is of greater cross-sectional area than the torsion spring 13 and so there will be less electrical heating of the leaf spring, reducing any annealing effect.

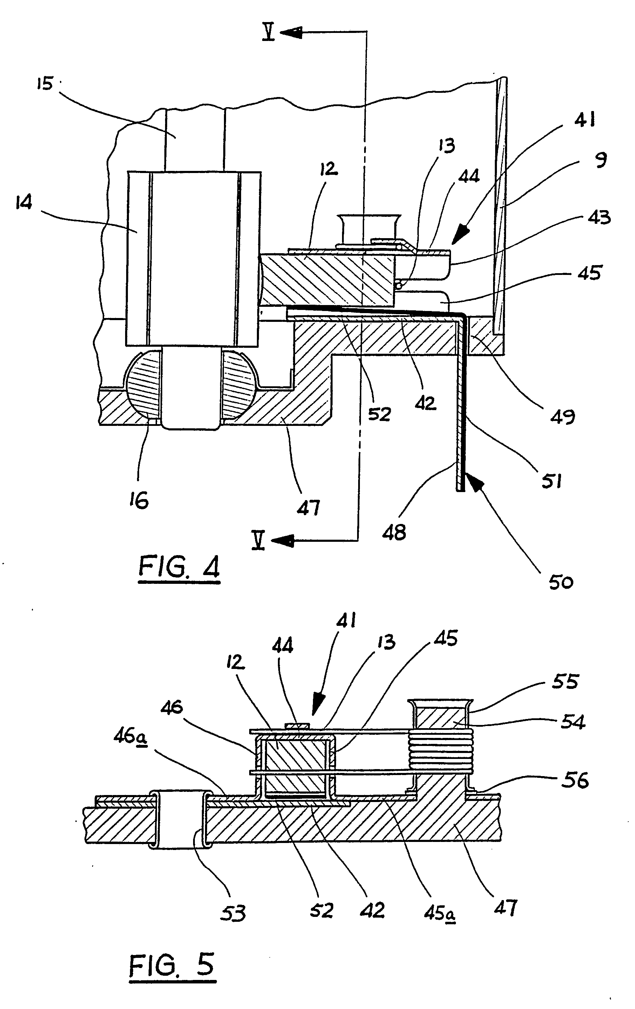

The second embodiment of a motor in accordance with the invention is illustrated in Figures 4 and 5 in which those reference numerals which are common to Figures 1 to 3 represent identical parts.

The brush assembly 41 shown in Figures 4 and 5 is similar to the brush assembly 11 of Figures 1 to 3 and comprises a metal base plate 42 forming a first wall of the brush cage 43, and a channel shaped metal portion having a top wall 44 parallel to the base plate 42, and side walls 45 and 46. The side walls 45 and 46 have respective flanges 45a and 46a which are fixed to the insulating end cap 47 so as to locate the channel shaped metal portion in position. Flange 46a and base plate 42 are fixed to the end cap 47 by a hollow rivet 53, whilst flange 45a encircles a post 54 on the end cap 47. A metal sleeve 55 is a force fit over the post 54 and holds the flange 45a against the end cap 47, through the intermediary of an insulating washer 56.

The metal base plate 42 is formed with an integral tab 48 which is generally at right angles to the plate 42 and which projects through a slot 49 in the insulating end cap 47. This tab 48 provides a terminal for the motor.

A leaf spring 50 is provided for urging the brush 12 against the inner face of top wall 44 of the brush assembly 41. This spring 50 comprises two obliquely inclined legs 51 and 52 the former of which is attached in electrical connection (e.g. by solder or the like) to a face of tab 48 so as to secure spring 50 in position. The end of leg 51 adjacent its junction with leg 52 locates in slot 49 in the end cap 47, leg 52 extending upwardly into the brush cage 43 as seen in Figure 4 to urge brush 12 against the top wall 44.

The spring 50 serves to reduce noise caused by brush chatter as well as reduce the heating of torsion spring 13 in the same way as the spring 26 in the embodiment of Figures 1 to 3.

A number of modifications may be made to the illustrated embodiments. For example, with the leaf spring mounted on the motor terminal, it is not necessary for the brush cage to be of metal or other conducting material. Thus, the cage may be of plastics and may be integrally moulded as part of the end cap of the assembly. The arm 51 of the leaf spring 50 may form the motor terminal, but it is preferred to use different materials to perform these different tasks. The leaf spring 50 may be riveted to a terminal, the assembly being gripped in a slot in the end cap to hold the spring and terminal in position.

Various modifications may be made to the described embodiments and it is desired to include all such modifications as fall within the scope of the accompanying claims.

## Claims

1. An electric motor having a brush assembly electrically connected to a terminal of the motor, the brush assembly comprising a brush slidably mounted in a generally rectangular cross-section tubular cage open at at least one end, first means for urging the brush through the open end of the cage onto a commutator of the motor and second means for urging the brush against a wall of the cage to reduce brush chatter, wherein said second means comprises a resilient electrically conducting leaf spring which is in electrical contact with the terminal and, which is mounted at one end and is configured to bear at its other end against the brush to bias it against the opposite wall of the cage.

2. An electric motor as claimed in claim 1, wherein the leaf spring urges the brush in the axial direction of the commutator.

3. An electric motor as claimed in claim 1 or 2, wherein the leaf spring is mounted on a wall of the cage.

4. An electric motor as claimed in claim 3, wherein the leaf spring is riveted to the cage wall.

5. An electric motor as claimed in any one of claims 1 to 4 wherein the leaf spring comprises a first end portion attached to the cage wall, a central portion bearing away from the cage wall and a second upturned end portion extending away from the brush, the leaf spring bearing on the brush at the junction between the central portion and the upturned end portion.

6. An electric motor as claimed in claim 1, wherein the leaf spring is mounted on the motor terminal.

7. An electric motor as claimed in claim 6, wherein the leaf spring has a first leg by which the spring is attached to the terminal and a second leg obliquely inclined relative to the first leg and extending within the cage to bear against the brush and urge it against an opposing wall of the cage.

8. An electric motor as claimed in claim 6 or 7, wherein the terminal is integral with a metallic base plate of the cage.

9. An electric motor as claimed in claim 6, wherein the cage is of a non-conducting material.

10. A fractional horsepower PMDC motor substantially as hereinbefore described with reference to Figures 1 to 3 or Figures 4 and 5 of accompanying drawings.

FIG. 1

FIG. 2

FIG. 3

FIG. 4

FIG. 5